# EUROPEAN PATENT SPECIFICATION

(11) **EP 1 427 947 B1**
(45) Date of publication and mention of the grant of the patent: **08.02.2006**
(21) Application number: 02755184.5
(22) Date of filing: 16.08.2002
(51) Int. Cl.: F16D 13/68, F16D 13/64

(54) **CLUTCH DRIVEN PLATE**
KUPPLUNGSSCHEIBE
DISQUE D'EMBRAYAGE

(30) Priority: 24.08.2001 GB 0120643
(43) Date of publication of application: 16.06.2004
(73) Proprietor: Automotive Products Group Limited, Leamington Spa, Warwickshire CV31 3ZL (GB)
(72) Inventor: YOUNG, Alastair, John, Kenilworth CV8 1DW (GB)
(74) Representative: Morrall, Roger
(86) International application number: PCT/GB2002/003786
(87) International publication number: WO 2003/019023

(56) References cited:
- EP-A- 0 764 793
- WO-A-01/86162
- DE-A- 4 322 578
- FR-A- 2 724 995

## Description

The present invention relates to driven plates for friction clutches and in particular to driven plates for friction clutches in motor vehicles.

Known driven plates for friction clutches comprise a central hub for connection with a shaft and an outer annular disc member carrying a friction lining means, the disc member being mounted concentrically about and drivingly connected to the hub. Such known driven plates are hereinafter referred to as driven plates of the type described.

Driven plates of the type described are often used in friction clutches for motor vehicles to selectively transfer drive from a flywheel, which may be attached to the crankshaft of an internal combustion engine, to a drive shaft of the vehicle transmission. Such known friction clutches typically comprise a clutch cover assembly attached to the flywheel with the driven plate located between the clutch cover assembly and the flywheel. The clutch cover assembly comprises a pressure plate which is biased axially towards the flywheel when the clutch is engaged to clamp the friction lining means of the driven plate between the pressure plate and the flywheel so that drive is transmitted from the flywheel to the driven plate and then via the hub to the transmission drive shaft.

It is known in driven plates of the type described for the outer annular disc member to be drivingly connected to the hub by means of inter-engaging drive formations which have limited radial and circumferential clearances to allow the disc member to move radially and circumferentially relative to the hub to a limited extent. Such driven plates may include a torsion damper to isolate the drive line from vibrations generated in the engine. It is also known for such driven plates to have a pre-damper or idle centre between the outer disc member and the central hub to isolate the drive line from low level vibrations which occur when the engine is idling or running at relatively low speed.

Alternatively driven plates of the type described may be of the rigid type in which no torsion damper is provided and the outer disc member is fixed rotationally fast with, or is integral with, the central hub. Such rigid driven plates are often used in conjunction with twin mass flywheels which comprise a torsion damper to isolate the drive line from vibrations generated by the engine.

Due to manufacturing tolerances et cetera, it is not always possible to ensure that when a vehicle engine and drive line are assembled the axes of the crankshaft and transmission drive shaft are in angular alignment. Where there is some angular misalignment between these axes then there will be a tendency for the friction lining means of the driven plate, which is clamped to the flywheel, to rotate about the axis of crankshaft or flywheel whilst the hub of the driven plate is constrained to rotate about the axis of the transmission drive shaft. Thus because the friction linings and the hub are rotating about separate non-angularly aligned axes, cyclical stresses are set up in the driven plate.

In addition, when the flywheel is attached to an internal combustion engine, the forces acting on the crankshaft of the engine may cause the flywheel to swash or whirl about the axis of the crankshaft. When the clutch is engaged the friction lining means of the driven plate will tend to follow the movement of the flywheel and so will swash or whirl about the hub which is constrained to rotate about the axis transmission drive shaft. This again sets up cyclical stresses in the driven plate.

When cyclical stresses are set up in the driven plate, this can lead to fatigue failure in the material of the driven plate. This is a particular problem in driven plates of the rigid type in which the friction linings are mounted on relatively thin spring segments. In such cases most of the relative movement between the friction linings and the central hub is absorbed by the spring segments which are flexible compared to the rest of the driven plate. As a consequence the segments are subjected to cyclical stressing and in extreme cases the material in the segments may fail due to fatigue.

Problems can also arise in driven plates of the type described which have a pre-damper or idle centre. In this type of driven plate the relative movement between the friction lining means and the hub may be taken up in the pre-damper which as a result is no longer able to function correctly.

A prior art clutch according to the preamble of claim 1 is known from FR-A-2,724,995.

An object of the present invention is to provide an improved driven plate of the type described which overcomes or at least mitigates the problems of the known driven plate.

Thus according to the present invention there is provided a clutch driven plate comprising:-A clutch driven plate comprising
- a central hub member,
- an outer annular disc member currying friction lining means, the disc member having a radially inner peripheral portion which is axially displaced relative to the remainder of the disc member and is connected thereto by an axially cranked portion of the disc member which extends at an angle to the radially inner peripheral portion,
- radially extending drive formations on the hub which engage corresponding drive formations on the radially inner peripheral portion of the outer disc member, and
- spring means carried by the disc member acting to try to maintain the radially inner peripheral portion in contact with one side of the radially extending drive formations,
- the driven plate being characterised in that drive formations on the radially inner peripheral portion of the outer disc comprise fully enclosed apertures/windows formed in the cranked portion of the disc member which are engaged by the radially extending drive formations on the hub to allow limited tipping of the disc member and hence the friction lining means relative to the hub member during use of the driven plate.

The spring means may comprise a disc-like spring member with radially inwardly extending spring fingers which bear against a side portion of the hub member to try to maintain said contact whilst allowing said tipping.
A gap may be provided between part of the spring fingers and an adjacent portion of the hub member which gap tends to close as the disc member tips relative to the hub so that the hub eventually contacts the spring fingers remote from their end portions to provide higher resistance to further tipping.

The radially extending drive formations may comprise teeth formed on the hub which engage apertures/windows in the cranked portion of the disc member.

In one embodiment of the invention the clearances between mating portions of the radially extending drive formations and the apertures/windows are only in the range classed as normal sliding tolerances (i.e. typically 0.05 mm on each side or 0.1 mm total) so that only limited tipping of the flange member relative to the hub member is possible.

In an alternative embodiment the radially and circumferential clearances between mating portions of the drive formations and apertures/windows are increased above normal sliding tolerances to give several degrees of angular movement, typical ±5°, and further spring means are provided to tend to centre the flange member relative to the hub member.

This further spring means may comprise a plurality of circumferentially spaced (circumferentially acting) compression springs acting between the hub and disc members.

The friction lining means may include axial cushioning. This cushioning may be provided by axially acting metal spring means (e.g. spring segments) acting between the disc member and friction lining means. Alternatively elastomeric means may be located between the disc member and the lining means to provide the axial cushioning. See, for example, the elastomeric cushion arrangements disclosed in the patents referred to later below.

One embodiment of the present invention will now be described, by way of example only, with reference to the accompanying drawings in which:-
Figure 1 shows a side view of a driven plate in accordance with the present invention;
Figure 2 shows an enlarged radial section on the line X-X of Figure 1;
Figure 3 shows a perspective view of the driven plate of Figure 1;
Figure 4 shows a perspective view of part of a spring segment friction lining mounting arrangement used in the driven plate of Figure 1;
Figure 5 shows a side view of a disc-like spring member used in the driven plate of Figure 1;
Figure 6 shows a side view of part of an inner portion of an outer annular disc member used in the driven plate of Figure 1;
Figure 7 shows a side view of a hub member used in the driven plate of Figure 1;
Figure 8 shows an enlarged view of the portion of figure 2 circled at Y;
Figure 9 shows an alternative construction to that shown in figure 8;
Figures 10 and 11 show perspective views of an alternative form of driven plate in accordance with the present invention which includes circumferentially acting compression springs, and
Figure 12 shows an alternative friction lining attachment arrangement for use in the driven plate of Figure 1.

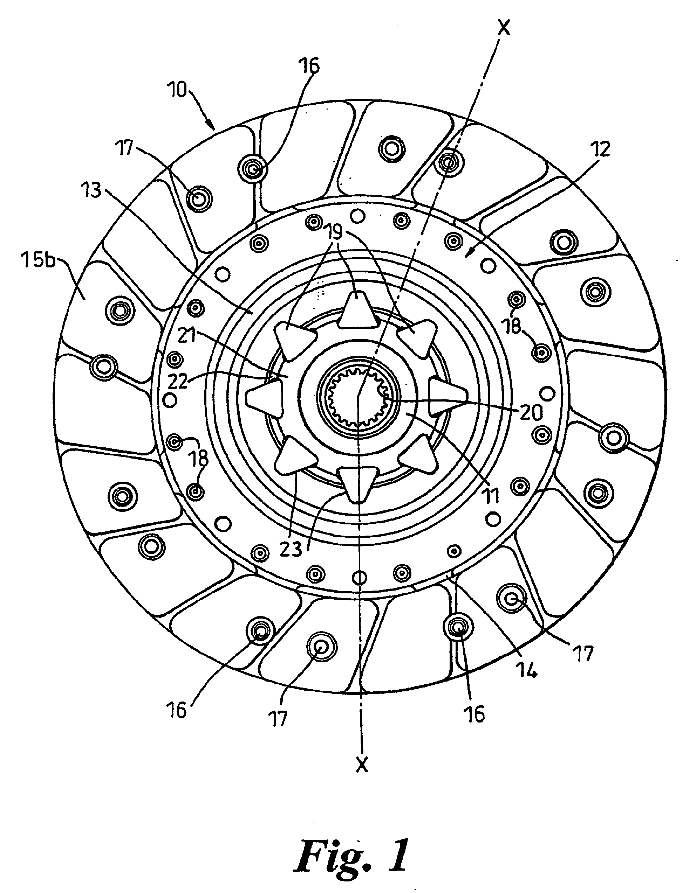

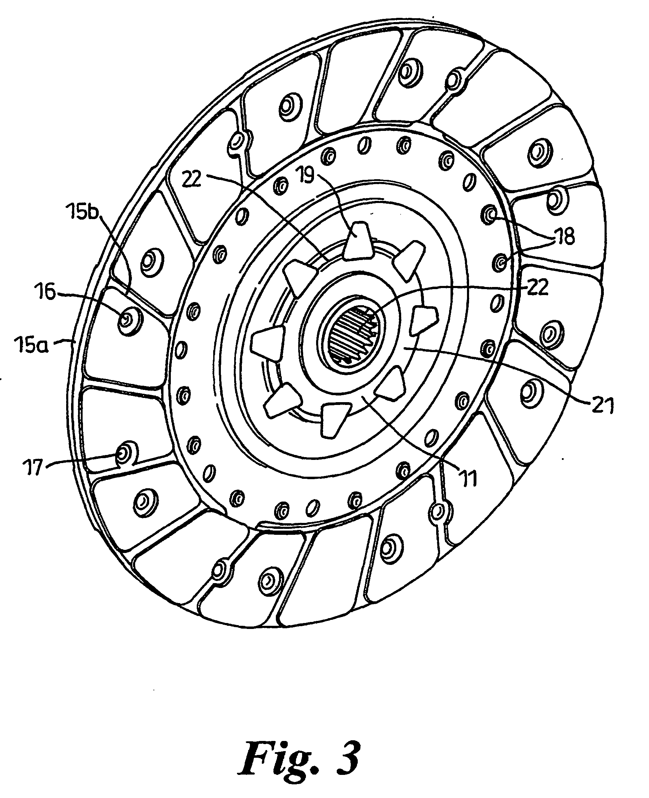

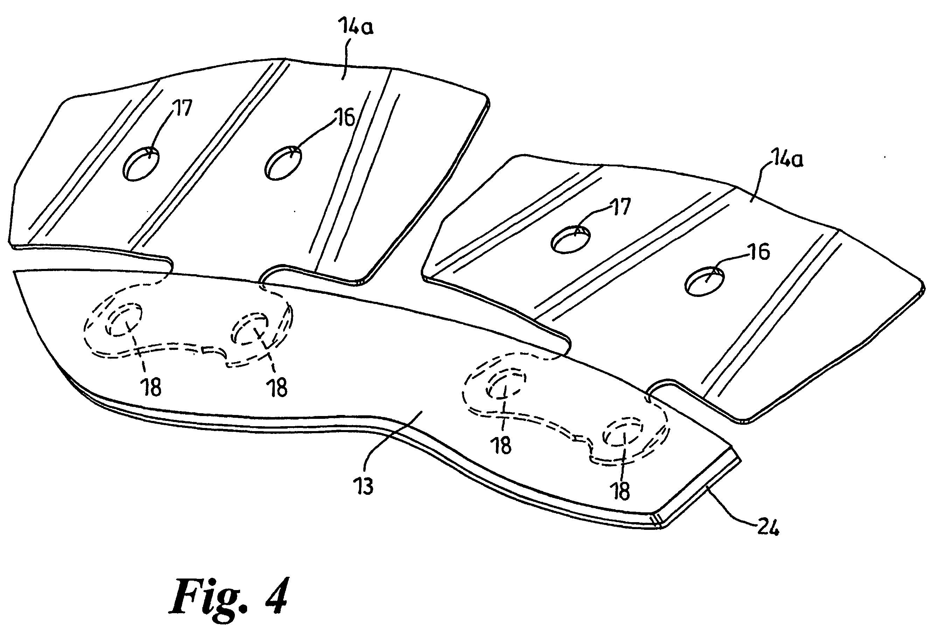

Referring to Figures 1 to 7 the driven plate 10 comprises a central hub 11 and an outer annular disc member 12 which comprises a radially inner portion 13 and a radially outer portion 14 in the form of circumferential spaced spring metal segments 14a (see Figure 4) Segments 14a carry annular friction linings 15a and 15b on opposite sides thereof. These linings are riveted to opposite sides of the segments 14a by two series of rivets 16 and 17 respectively. The spring segments 14a of disc member 12 is riveted to the inner portion 13 by a further series of rivets 18 and provide axial cushioning of the linings in the known manner.

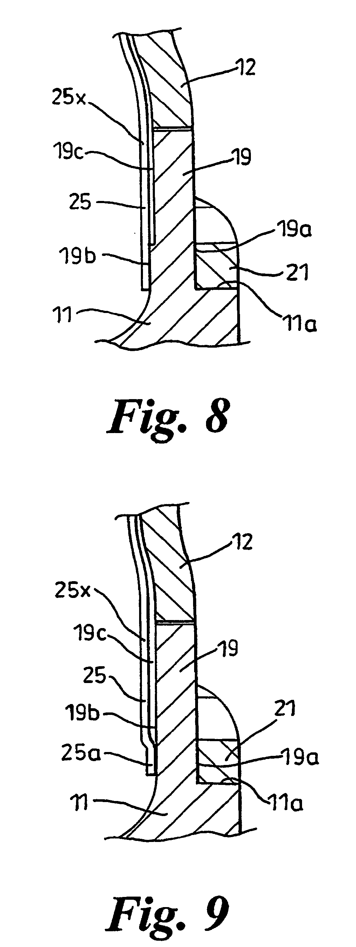

In accordance with the invention the hub 11 has a series of radially extending drive formations in the form of teeth 19 (see figure 7) and inner splines 20 for engagement with an associated transmission drive shaft (not shown).

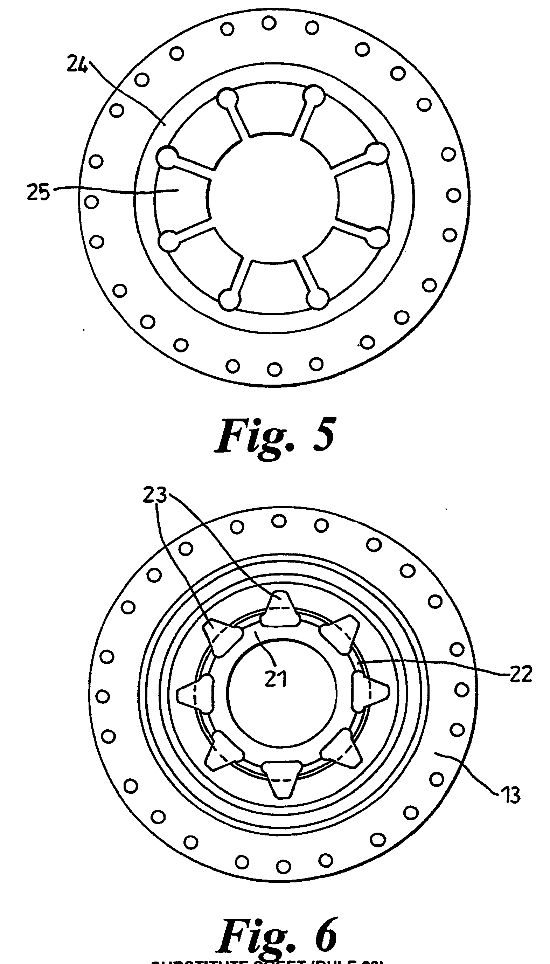

The inner portion 13 of disc member 12 (see Figure 6) has an inner peripheral portion 21 which is displaced axially relative to the remainder of the inner portion 13 by an axially cranked portion 22. The cranked portion 22 is itself provided with apertures/windows 23 into which the radially extending teeth 19 extend. The clearances between the teeth 19 and the apertures 23 are normal engineering sliding clearances (i.e. typically 0.05 mm on each side or 0.1 mm total)

The inner peripheral portion 21 of the disc member 12 is held in contact with the right hand face 19a of the hub member by a disc-like spring member 24 shown in detail in Figure 5. This spring member is riveted to the inner portion 13 of disc member 12 by the same rivets 18 as the outer disc portion 14 and has radially inwardly projecting spring fingers 25 which bear against the stepped left hand side 19b of hub member 11 to maintain the inner peripheral portion 21 of inner disc portion 13 in contact with the right hand face 19a of the hub. This is shown on a larger scale in figure 8 where the gap 19c between the spring fingers 25 and the outer portion of teeth 19 caused by the step 19b can be seen.

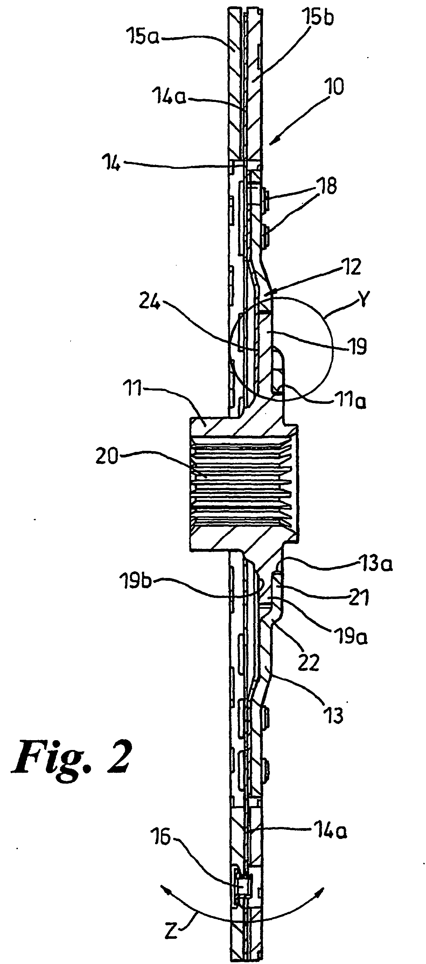

As will be appreciated, the annular disc member 12 can tilt as shown by the arrow Z in Figure 2 relative to the hub portion 11 as a result of the flexing of disc-like member 14 which tends to return the disc member 12 to the centralised position shown in Figure 2. When the tilting of disc-like member 14 exceeds a predetermined angle gap 19c is closed and teeth 19 contact fingers 25 in the region 25x thereof (see figure 8) so that further resistance to tilting is applied.

Thus the driven plate can accommodate mis-alignment between the axis of rotation of an associated flywheel (not shown) against which the friction linings 15a and 15b are clamped when the clutch is engaged and the associated transmission drive shaft (also not shown) which engages splines 20.

Figure 9 shows an alternative form of fingers 25 in which the gap 19c is provided without stepping the left hand side 19b of fingers 19 by bending the radially inner portions 25a of fingers 25 to the right as viewed in figure 9.

This simplifies the manufacture of hub 11 which can be still further simplified and made more economical by other measures such as fabricating the radially extending fingers 10 on a separate component from the inner sleeve portion of the hub.

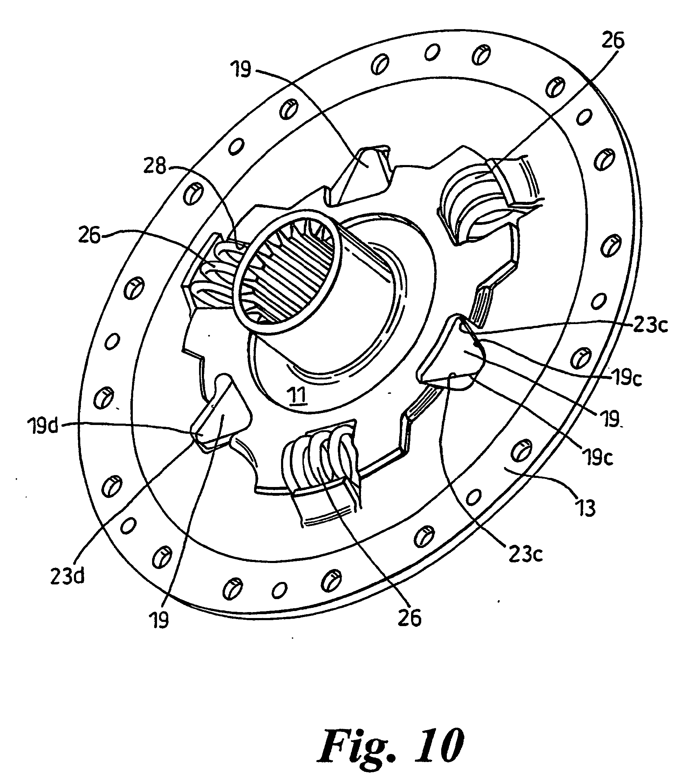

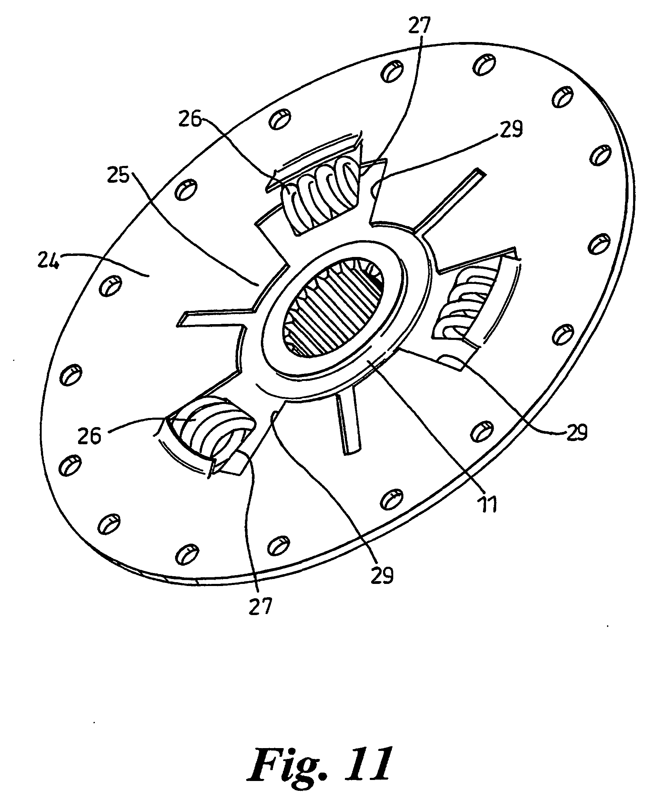

Figures 10 and 11 show a view of an alternative form of the inner portion 13 of the driven plate in which a fewer number of radially extending teeth 19 and co-operating apertures 23 are provided and the circumferential clearance between the flanks 19c of the teeth 19 and the sides 23c of the apertures 23 and the radial clearance between the tips 19d of teeth 19 and the outer edges 23d of the apertures 23 are significantly greater. These increased clearances allow the hub 11 to move circumferentially by typically 5° in each direction. This freedom of movement also allows the hub 11 to move radially relative to the inner disc member portion 13. This radial movement would be limited by the clearance between the bore 13a of inner portion 13 and the diameter of the step 11a on hub 11 which is typically 0.5 to 1 mm. This movement between teeth 19 and apertures 23 is resisted by circumferentially extending and acting compression springs 26 which act in pockets 27 in the hub 11 and windows 28 in the inner portion 13 of the disc member 12. Typically the springs 26 allow this ± 5° travel to be taken-up at a relatively low proportion of the maximum engine torque (typically 10°-30%, say 20%) depending on the application so that the driven plate effectively becomes solid at low engine torques. The rate of springs 26 and any pre-load thereon must also be designed to ensure that the disc portion 13 cannot be centrifuged off-centre at normal running speeds.

As can be seen from Figure 11, some of the fingers 25 of the disc-like spring member 24 are cut away at 29 to allow the hub 11 to move circumferentially relative to disc member 13 without contacting springs 26. The larger clearances provided between the teeth 19 and apertures 23 allows the disc member 12 to not only cater for angular misalignment of the flywheel and transmission input shaft but also to cater for a degree of radial misalignment so that the driven plate is not only self-aligning but self-centring under the action of the compression springs 26.

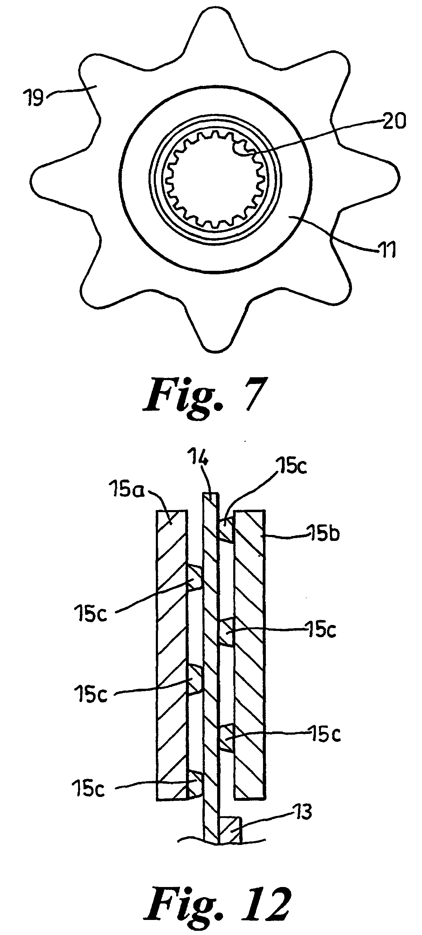

Although in the arrangements described above the friction linings 15a and 15b have been secured on either side of the spring segments 14a of the disc member 12 by rivets 16 and 17, it will be appreciated that the friction linings 15a and 15b may be bonded to an annular outer portion 14 of the disc member 12 using elastomeric cushioning beads of adhesive 15c as shown in Figure 12 and as described in, for example, patents EP0252583, EP0390797, EP0323036, EP0455694, EP0510014, EP 0442539, EP 0638149, GB2247725, GB2243419 and GB2272494. In a still further alternative arrangement the friction linings 5a and 15b may be rigidly secured to a rigid outer portion 14 of disc member 12 to provide a driven plate without axially cushioned linings.

## Claims

1. A clutch driven plate (10) comprising
- a central hub member (11),
- an outer annular disc member (12) carrying friction lining means (15a,15b), the disc member having a radially inner peripheral portion (13) which is axially displaced relative to the remainder (14) of the disc member and is connected thereto by an axially cranked portion (22) of the disc member which extends at an angle to the radially inner peripheral portion,
- radially extending drive formations (19) on the hub which engage corresponding drive formations (23) on the radially inner peripheral portion of the outer disc member, and
- spring means (24) carried by the disc member acting to try to maintain the radially inner peripheral portion (13) in contact with one side of the radially extending drive formations (19),
- the driven plate being **characterised in that** drive formations (23) on the radially inner peripheral portion of the outer disc comprise fully enclosed apertures/windows (23) formed in the cranked portion (22) of the disc member which are engaged by the radially extending drive formations (19) on the hub to allow limited tipping of the disc member (12) and hence the friction lining (15a,15b) means relative to the hub member (11) during use of the driven plate.

2. A driven plate according to claim 1 **characterised in that** the spring means comprises a disc-like spring member (24) with radially inwardly extending spring fingers (25) which bear against a side portion (19) of the hub member (11) to try to maintain said contact whilst allowing said tipping.

3. A driven plate according to claim 2 **characterised in that** a gap (19c) is provided between part of the spring fingers (25) and an adjacent portion (19) of the hub member (11) which gap tends to close as the disc member (12) tips relative to the hub so that the hub eventually contacts the spring fingers remote from their end portions to provide higher resistance to further tipping.

4. A driven plate according to claims 2 or 3 **characterised in that** the radially extending drive formation comprise teeth (19) formed on the hub (11) which engage the apertures/windows (23) in the cranked portion (22) of the disc member (12).

5. A driven plate according to any one of claims 1 to 4 **characterised in that** the clearances between mating portions of the radially extending drive formations (19) and the apertures/windows (23) are in the range classed as normal sliding tolerances so that only limited tipping of the disc member (12) relative to the hub member (11) is possible.

6. A driven plate according to any one of claims 1 to 4 **characterised in that** the radially and circumferential clearances between mating portions of the drive formations (19) and apertures/windows (23) are increased above normal sliding tolerances to give several degrees of angular movement and further spring means (26) are provided to tend to centre the disc member (12) relative to the hub member (11).

7. A driven plate according to claim 6 **characterised in that** the further spring means comprises a plurality of circumferentially spaced compression springs (26) acting between the hub member (11) and the disc member (12).

8. A driven plate according to any one of claims 1 to 7 **characterised in that that** friction lining means (15a,15b) includes axial cushioning.

9. A driven plate according to claim 8 **characterised in that** the axial cushioning is provided by axially acting metal springs (14a) acting between the disc member (14) and the friction lining means(15a,15b).

10. A driven plate according to claim 9 **characterised in that** the axial cushioning is provided by elastomeric cushion means acting between the disc member (14) and the friction lining means (15a,15b).

## Patentansprüche

1. Kupplungsmitnehmerscheibe (10) mit
- einem zentralen Nabenteil (11),
- einem äußeren ringförmigen Scheibenteil (12), das Reibungsbelagmittel (15a, 15b) trägt, wobei das Scheibenteil ein radial inneres Umfangsteil (13) hat, das relativ zu dem Rest (14) des Scheibenteiles axial versetzt ist und damit durch ein axial gekröpftes Teil (22) des Scheibenteiles verbunden ist, das sich in einem Winkel zu dem radial inneren Umfangsteil erstreckt,
- radial sich erstreckenden Antriebsgebilden (19) an der Nabe, die mit entsprechenden Antriebsgebilden (23) an dem radial inneren Umfangsteil des äußeren Scheibenteiles in Eingriff sind, und
- einem von dem Scheibenteil getragenen Federmittel (24), das wirkt, um zu versuchen, das radial innere Umfangsteil (13) in Kontakt mit einer Seite der radial sich erstreckenden Antriebsgebilde (19) zu halten,
- wobei die Mitnehmerscheibe **dadurch gekennzeichnet ist, dass** die Antriebsgebilde (23) an dem radial inneren Umfangsteil der äußeren Scheibe vollständig umschlossene, in dem gekröpften Teil (22) des Scheibenteiles gebildete Öffnungen/Fenster (23) aufweisen, in die die radial sich erstreckenden Antriebsgebilde (19) an der Nabe eingreifen, um dem Scheibenteil (12) und damit den Reibungsbelagmitteln (15a, 15b) ein begrenztes Kippen relativ zu dem Nabenteil (11) während des Gebrauchs der Mitnehmerscheibe zu gestatten.

2. Mitnehmerscheibe nach Anspruch 1, **dadurch gekennzeichnet, dass** das Federmittel ein scheibenähnliches Federteil (24) mit radial nach innen ragenden Federfingern (25) umfasst, die an einem Seitenteil (19) des Nabenteils (11) anliegen, um zu versuchen, den besagten Kontakt aufrecht zu erhalten und dabei das Kippen zu gestatten.

3. Mitnehmerscheibe nach Anspruch 2, **dadurch gekennzeichnet, dass** ein Spalt (19c) zwischen einem Teil der Federfinger (25) und einem angrenzenden Teil (19) des Nabenteiles (11) vorgesehen ist, wobei der Spalt dazu neigt, sich zu schließen, wenn das Scheibenteil (12) relativ zu der Nabe kippt, so dass die Nabe schließlich die Federfinger fern von ihren Endteilen berührt, um einen höheren Widerstand gegen weiteres Kippen zu schaffen.

4. Mitnehmerscheibe nach den Ansprüchen 2 oder 3, **dadurch gekennzeichnet, dass** die radial sich erstreckenden Antriebsgebilde an der Nabe (11) gebildete Zähne (19) umfassen, die in die Öffnungen/Fenster (23) in dem gekröpften Teil (22) des Scheibenteiles (12) eingreifen.

5. Mitnehmerscheibe nach irgendeinem der Ansprüche 1 bis 4, **dadurch gekennzeichnet, dass** die Zwischenräume zwischen zusammenpassenden Teilen der radial sich erstreckenden Antriebsgebilde (19) und der Öffnungen/Fenster (23) in dem als normale Gleittoleranzen klassifizierten Bereich liegen, so dass nur ein begrenztes Kippen des Scheibenteiles (12) relativ zu dem Nabenteil (11) möglich ist.

6. Mitnehmerscheibe nach irgendeinem der Ansprüche 1 bis 4, **dadurch gekennzeichnet, dass** die radialen und in Umfangsrichtung vorhandenen Zwischenräume zwischen den zusammenpassenden Teilen der Antriebsgebilde (19) und der Öffnungen/Fenster (23) über die normalen Gleittoleranzen hinaus vergrößert sind, um einige Grad an Drehbewegung zu geben, und weitere Federmittel (26) vorgesehen sind, die dazu neigen, das Scheibenteil (12) relativ zu dem Nabenteil (11) zu zentrieren.

7. Mitnehmerscheibe nach Anspruch 6, **dadurch gekennzeichnet, dass** das weitere Federmittel eine Vielzahl von in Umfangsrichtung beabstandeten Druckfedern (26) umfasst, die zwischen dem Nabenteil (11) und dem Scheibenteil (12) wirken.

8. Mitnehmerscheibe nach irgendeinem der Ansprüche 1 bis 7, **dadurch gekennzeichnet, dass** das Reibungsbelagmittel (15a, 15b) eine axiale Federung beinhaltet.

9. Mitnehmerscheibe nach Anspruch 8, **dadurch gekennzeichnet, dass** die axiale Federung durch axial wirkende Metallfedern (14a), die zwischen dem Scheibenteil (14) und dem Reibungsbelagteil (15a, 15b) wirken, bereitgestellt ist.

10. Mitnehmerscheibe nach Anspruch 9, **dadurch gekennzeichnet, dass** die axiale Federung durch ein elastomeres Federmittel, das zwischen dem Scheibenteil (14) und dem Reibungsbelagmittel (15a, 15b) wirkt, bereitgestellt ist.

## Revendications

1. Disque d'embrayage (10) comprenant
- un moyeu central (11),
- un disque annulaire extérieur (12) portant des moyens de garniture de friction (15a, 15b), le disque présentant une partie périphérique radiale interne (13) dont l'axe est déplacé par rapport au reste (14) du disque et lui est relié par une partie axialement coudée (22) du disque, qui s'étire en formant un angle jusqu'à la partie périphérique radiale interne,
- des protubérances d'entraînement en extension radiale (19) sur le moyeu et s'engageant dans des protubérances d'entraînement correspondantes (23) situées sur la partie périphérique radiale interne du disque externe, et des moyens élastiques (24) portés par le disque et dont le travail consiste à essayer de maintenir la partie périphérique radiale interne (13) en contact avec un côté des protubérances d'entraînement en extension radiale (19),
- le disque d'embrayage **se caractérisant en ce que** les protubérances d'entraînement (23) situées sur la partie périphérique radiale interne du disque externe comprennent des ouvertures/fenêtre (23) complètement enfermées, ménagées dans la partie coudée (22) du disque et dans lesquelles s'engagent les protubérances d'entraînement en extension radiale (19) sur le moyeu, pour permettre une inclinaison limitée du disque (12) et, par conséquent, des moyens (15a, 15b) de garniture de friction par rapport au moyeu (11), lors de l'utilisation du disque d'embrayage.

2. Disque d'embrayage selon la revendication 1, **caractérisé en ce que** les moyens élastiques comprennent un élément élastique ressemblant à un disque (24) et pourvu de doigts élastiques (25) en extension radiale vers l'intérieur, qui s'appuient contre une partie latérale (19) du moyeu (11) pour essayer de maintenir ledit contact tout en permettant ladite inclinaison.

3. Disque d'embrayage selon la revendication 2, **caractérisé en ce qu'**un interstice (19c) est ménagé entre une partie des doigts élastiques (25) et une partie adjacente (19) du moyeu (11), lequel interstice tend à se refermer lorsque le disque (12) s'incline par rapport au moyeu, de sorte que ce dernier touche finalement les doigts élastiques à distance de leurs parties d'extrémité pour offrir une résistance plus importante si l'inclinaison s'accentue.

4. Disque d'embrayage selon les revendications 2 ou 3, **caractérisé en ce que** les protubérances d'entraînement en extension radiale comprennent des dents (19) formées sur le moyeu (11), qui s'engagent dans les ouvertures/fenêtres (23) de la partie coudée (22) du disque (12).

5. Disque d'embrayage selon l'une quelconque des revendications 1 à 4, **caractérisé en ce que** les jeux entre les parties jointives des protubérances d'entraînement en extension radiale (19) et les ouvertures/fenêtres (23) sont dans la plage des tolérances de glissement considérées comme normales, de manière à permettre uniquement une inclinaison limitée du disque (12) par rapport au moyeu (11).

6. Disque d'embrayage selon l'une quelconque des revendications 1 à 4, **caractérisé en ce que** le jeu radial et le jeu circulaire entre les parties jointives des protubérances d'entraînement (19) et les ouvertures/fenêtres (23) sont supérieurs aux tolérances de glissement normales, pour fournir plusieurs degrés de déplacement angulaire, et **en ce que** des moyens élastiques supplémentaires (26) sont prévus pour tendre à centrer le disque (12) par rapport au moyeu (11).

7. Disque selon la revendication 6, **caractérisé en ce que** les moyens élastiques supplémentaires comprennent une pluralité de ressorts de compression (26) espacés sur la circonférence et travaillant entre le moyeu (11) et le disque (12).

8. Disque d'embrayage selon l'une quelconque des revendications 1 à 7, **caractérisé en ce que** les moyens de garniture de friction (15a, 15b) comprennent un amortissement axial.

9. Disque d'embrayage selon la revendication 8, **caractérisé en ce que** l'amortissement axial est assuré par des ressorts métalliques (14a) travaillant dans le sens axial entre le disque (14) et les moyens de garniture de friction (15a, 15b).

10. Disque d'embrayage selon la revendication 9, **caractérisé en ce que** l'amortissement axial est assuré par des moyens d'amortissement élastomères travaillant entre le disque (14) et les moyens de garniture de friction (15a, 15b).
